# EUROPEAN PATENT SPECIFICATION

(11) **EP 4 612 247 B1**
(45) Date of publication and mention of the grant of the patent: **04.03.2026**
(21) Application number: 24701493.9
(22) Date of filing: 11.01.2024
(51) Int. Cl.: C09J 5/02, C09J 5/08, C09J 11/06, C09J 161/06, B32B 15/06, B32B 37/12, C08K 5/3472, B32B 15/04, C08K 3/22, C09J 5/00

(54) **ADHESIVE COMPOSITION AND/OR METHOD OF REMOVING ELASTOMER LINER FROM METAL SUBSTRATE**
KLEBSTOFFZUSAMMENSETZUNG UND/ODER VERFAHREN ZUM ENTFERNEN EINER ELASTOMERAUSKLEIDUNG VON EINEM METALLSUBSTRAT
COMPOSITION ADHÉSIVE ET/OU PROCÉDÉ D'ÉLIMINATION DE REVÊTEMENT ÉLASTOMÈRE D'UN SUBSTRAT MÉTALLIQUE

(30) Priority: 23.01.2023 GB 202300949
(43) Date of publication of application: 10.09.2025
(73) Proprietor: Weir Minerals Chile S.A., Santiago (CL)
(72) Inventor: PINEDA, Daniel, Ñuñoa (CL); PEREZ, Cristian, San Miguel (CL); ARELLANO, Jose, Santiago (CL); BERTRAN, Mario, Vitacura (CL)
(74) Representative: MacLeod, Roderick William
(86) International application number: PCT/IB2024/050291
(87) International publication number: WO 2024/157105

(56) References cited:
- WO-A1-2007/145635
- CN-A- 1 753 963
- CN-A- 104 647 832
- JP-A- 2009 083 444
- US-A1- 2005 186 419
- US-A1- 2017 282 494
- ANONYMOUS: "SHORE-H�rte - Lexikon der Kunststoffpr�fung", 4 August 2023 (2023-08-04), pages 1 - 8, XP093191002, Retrieved from the Internet <URL:https://wiki.polymerservice-merseburg.de/index.php/SHORE-H�rte> [retrieved on 20240809]

## Description

### TECHNICAL FIELD

This disclosure relates generally to an adhesive and/or primer composition and/or a method of removing an elastomer liner from a metal substrate.

### BACKGROUND ART

Elastomer liners are commonly applied to equipment in mineral processing plants to provide a layer of material that is resistant to wear and which may be replaced once the layer of material becomes degraded over time. Typically, the elastomer liner is applied to a substrate, which is composed of a metal or metal alloy using an adhesive. The adhesive may be a combination of a primer and an adhesive composition. Once the elastomer liner has degraded through use, it must be removed from the substrate so that a replacement liner may be fitted.

Due to the strong bond of the adhesive, the removal process typically involves the use of high temperatures and/or strong solvents to break the adhesive bond between the degraded elastomer liner and the metal substrate. The use of high temperatures or strong solvents during this process means that harmful emissions are produced which cause an unsafe work environment, as well as significant environmental impact.

The present disclosure seeks to provide an alternative adhesive and/or primer composition. The present disclosure also seeks to provide an alternative method of removing an elastomer liner bonded to a metal substrate.

US 2005/186419 discloses a heat-peelable adhesive sheet which can be easily stripped from adherends by a heat treatment.

US 2017/282494 discloses a foamable hot melt adhesive comprising greater than about 35 wt % of a rubber block copolymer, a tackifier and less than about 5 wt % of a wax.

CN 1 753 963 discloses a method of thermally separating an adhesive composite comprising an adhesive composition which contains a gas generating agent such as azodicarbonamide.

CN 104 647 832 discloses a method of preparing a composite sealing material comprising a metal substrate, a bonding coating, a foamed rubber coating, and a rubber coating.

### SUMMARY OF THE DISCLOSURE

In a first aspect there is provided a primer composition for adhering an elastomer layer to a metal substrate wherein the primer composition includes a blowing agent; and titanium dioxide; characterised in that the blowing agent is 5-phenyltetrazole.

The blowing agent may be included in an amount between 1 wt% and 5 wt%. Experiments have indicated that the blowing agent has an effect when present in an amount of greater than or equal to 1 wt%, but slightly higher amounts have a better effect.

In one form, the primer composition includes phenolic resin.

In certain embodiments, the primer composition further includes any one or a combination of the following further constituents: carbon black, ethylbenzene, methyl ethyl ketone, methyl isobutyl ketone, xylene, ethyl alcohol, toluene, tetrachloroethylene, phenol, and, trichloroethylene.

In a certain embodiment, the elastomer layer is a synthetic rubber with a shore hardness of 50 to 70.

In another embodiment, the elastomer layer is a natural rubber with a shore hardness of 35 to 7.

In yet another embodiment, the elastomer layer is a blend of natural rubber and synthetic rubber with a shore hardness of 35 to 75.

According to another aspect, there is provided a method of adhering an elastomer layer to a metal substrate as set forth in claim 8..

In a certain embodiment, the elastomer layer is a synthetic rubber with a shore hardness of 50 to 70 and wherein a further elastomer layer is bonded to the elastomer layer. In one form, the further elastomer layer is an anti-abrasion rubber layer.

In another embodiment, the elastomer layer is a natural rubber with a hardness of 35 to 65 and wherein a further elastomer layer is bonded to the elastomer layer. Preferably, the further elastomer layer is an anti-abrasion rubber layer.

In yet another embodiment, the elastomer layer is a blend of natural rubber and synthetic rubber with a shore hardness of 35 to 65 and wherein a further elastomer layer is bonded to the elastomer layer. Preferably, the further elastomer layer is an anti-abrasion rubber layer.

According to an unclaimed aspect, there is provided a method of removing an elastomer layer from a metal substrate wherein the elastomer layer is bonded to the metal substrate with an adhesive composition to form a lined metal substrate, wherein the method includes the following steps: (a) heating the lined metal substrate to a temperature of between about 110°C and about 350°C whereby the adhesive composition bonding the elastomer layer to the metal substrate degrades; and, (b) applying force to the elastomer layer and removing same from the metal substrate.

In certain embodiments, the temperature is between about 150°C and about 280°C.

### BRIEF DESCRIPTION OF THE DRAWINGS

Notwithstanding any other forms which may fall within the scope of the composition and methods and apparatus as set forth in the Summary, specific embodiments will now be described, by way of example, and with reference to the accompanying drawings in which:
Figure 1 is a schematic diagram depicting the layers and adhesive system for a lined metal substrate;
Figure 2 is a photograph showing the results of two samples undergoing an adhesion test according to standard ASTM D429-E;
Figure 3 is a photograph showing the result of another sample undergoing an adhesion test according to standard ASTM D429-E; and,
Figure 4 is a photograph showing the results of the three samples undergoing an adhesion test according to standard ASTM D429-E after a heat treatment has been applied to the samples.

### DETAILED DESCRIPTION OF SPECIFIC EMBODIMENTS

The present disclosure is directed to an adhesive and/or primer composition for adhering an elastomer layer to a metal substrate that can be degraded at a temperature which is less than the combustion temperature of the elastomer layer. An elastomer layer may be bonded to the metal substrate with an adhesive composition to form a lined metal substrate. The elastomer layer may then be removed from the metal substrate by heating the lined metal substrate to a temperature where the adhesive composition starts to degrade so that the elastomer layer may then be released from the metal substrate through the application of appropriate force, such as removal by hand. The adhesive composition and method of removal provides that metal substrates may be easily stripped of any elastomer layers without requiring high temperatures or strong solvents providing a safer work environment free or substantially reduced of harmful emissions that are dangerous to workers and the environment.

To provide that the adhesive composition of the present disclosure degrades at a temperature which is less than the combustion temperature of the elastomer, a blowing agent may be added to the adhesive composition. Without wishing to be bound by theory, the blowing agent reacts once the temperature of the adhesive composition reaches a certain temperature and produces a gas. This reaction, or the production of gas, degrades the adhesive nature of the adhesive composition weakening the bond between the elastomer layer and the metal substrate.

The blowing agent (also known in the art as a pneutmatogen) may be selected from any suitable blowing agent which when included in the adhesive composition reacts to form a gas when heated to a temperature which is less than the combustion temperature of the elastomer.

The blowing agent may be included in the adhesive composition in an amount of greater than or equal to 1 wt%. Preferably, the blowing agent is included in the adhesive composition in an amount ranging from about 1 wt% to about 5 wt%. In a preferred form, the blowing agent may be included in the adhesive composition in an amount ranging from about 1 wt% to about 4 wt%. In another preferred form, the blowing agent may be included in the adhesive composition in an amount ranging from about 1 wt% to about 2 wt%. In still a further preferred form, the blowing agent may be included in the adhesive composition in an amount ranging from about 2 wt% to about 3 wt%.

The blowing agent may be one or more compounds selected from carbonamides, hydrazides, semicarbazides and carbazides. The blowing agent may be selected from one or more of the following: 5-phenyltetrazole, azodicarbonamide, modified azodicarbonamide, p,p-oxybisbenzenesulfonylhydrazide/ oxybisbenzenesulfonylhydrazide, p-toluenesulfonylhydrazide, p-toluenesulfonylsemicarbazide, p-toluenesulfonylcarbazide, and modified sodiumbicarbonate. According to the present invention, the blowing agent is 5-phenyltetrazole.

According to the present invention, the adhesive composition is a primer composition. A primer composition is a composition that may be initially applied to a surface of the metal substrate which provides that the surface of the metal substrate adheres more strongly with a further adhesive composition for bonding the elastomer layer to the metal substrate. The further adhesive composition may be applied between the primer composition and the surface of the elastomer layer.

The primer composition may include a phenolic resin as a primary constituent.

According to the present invention, the primer composition includes titanium dioxide. The primer composition may further include any one or a combination of the following further constituents: carbon black, ethylbenzene, methyl ethyl ketone, methyl isobutyl ketone, xylene, ethyl alcohol, toluene, tetrachloroethylene, phenol and trichloroethylene.

According to another embodiment, which is not in accordance with the invention, the adhesive composition may be a hot bonding adhesive composition and may further include any one or a combination of the following further constituents: xylene, tetrachloroethylene, ethyl benzene, carbon black, lead oxide phosphonate, and toluene.

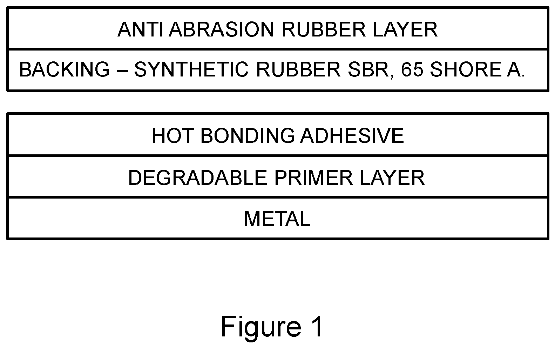

Referring to Figure 1, there is shown a lined metal substrate with an adhesive system in accordance with an example embodiment of the present disclosure. The adhesive system includes an adhesive composition in the form of a degradable primer composition including a blowing agent as a component of the degradable primer composition. In this example embodiment, the blowing agent is 5-phenyltetrazole and the degradable primer composition is based on a composition including phenolic resin.

The method of adhering the elastomer layer to the metal substrate to form the lined metal substrate commences with applying the degradable primer composition directly onto the surface of the metal. Once the degradable primer composition is applied and allowed to cure, a hot bonding adhesive is then applied to the degradable primer layer after which an elastomer layer is applied to the hot bonding adhesive. The hot bonding adhesive is then allowed to cure thereby bonding the elastomer layer to the metal substrate.

In the example embodiment depicted in Figure 1, the elastomer layer is in the form of a synthetic elastomer backing which has a shore hardness of 65 Shore A. The elastomer layer may also be selected from a natural rubber/polymer or a blend of natural and synthetic rubber/polymer. Whilst the elastomer layer may be selected from any natural or synthetic polymer having elastic properties, it was found that by bonding an elastomer backing layer with shore hardness greater than 55 shore A, and preferably greater than 60 shore A, the elastomer backing layer was easier to remove once the primer layer was subsequently degraded through a temperature treatment owing to the increased rigidity of the backing elastomer layer. It is preferred that the backing elastomer layer has a shore hardness of less than 70 shore A.

Figure 1 depicts a further elastomer layer which is bonded to the synthetic elastomer backing. The further elastomer layer is in the form of an anti-abrasion rubber layer. The anti-abrasion rubber layer may be used as a liner for a metal substrate which is subjected to erosive wear such as for example in situations where the metal substrate is exposed to slurry and wet abrasive conditions. Examples of the form the metal substrate may take include apparatus such as pipes, hoses and tanks, which may be subject to wet abrasive conditions depending on the application.

Once the anti-abrasion rubber layer becomes worn during use, the elastomer layer may be removed from the metal substrate by degrading the primer layer. The method of removing the elastomer layer from the metal substrate involves heating the lined metal substrate to a temperature of between about 110°C and about 350°C whereby the primer layer bonding the hot bonding adhesive to the metal substrate begins to degrade. The degradation is caused by the blowing agent included in the composition of the primer. Once the primer reaches a temperature where the blowing agent starts to decompose and forms a gas, the gas begins to break the adhesive bonds formed between the hot bonding adhesive and the metal substrate so that the synthetic rubber backing starts to peel away from the metal substrate. In the present example, the blowing agent included in the degradable primer composition is 5-phenyltetrazole which begins to decompose and begins to form a gas once the composition reaches a temperature of 234 °C to 245 °C.

It is important that the blowing agent may be selected from a composition that has a decomposition temperature which is less than the combustion temperature of the elastomer layer which in the example shown in Figure 1 is about 350°C. The inclusion of 5-phenyltetrazole provides that the degradable primer composition begins to degrade at 234°C well below the combustion temperature of the elastomer layer.

Once the primer layer has been degraded sufficiently, the synthetic rubber, natural rubber or blend of synthetic and natural rubber backing may be easily removed from the metal substrate by hand taking with it the anti-abrasion layer bonded to the synthetic rubber, natural rubber or blend of synthetic and natural rubber backing.

The present invention will become better understood from the following examples of preferred but non-limiting embodiments thereof.

### EXAMPLES

### Examples 1 to 3

Three sample primer compositions were prepared which included the addition of a blowing agent in the compositions. The sample primer compositions were then tested for their adhesion properties before and after a thermal treatment in an oven at 250°C for 30 minutes.

Three commercially available primer compositions under the trade names PR200 (Rema TipTop)(registered trade mark or RTM), RC2002 (Vulcaflex) (RTM) and Chemlok 205 (RTM) were used as the base primer composition for the respective three sample primer compositions. These commercially available primer compositions each include phenolic resins. A blowing agent commercially available under the trade name Cellcom 5PT (RTM) was added to each of the three primer compositions. Cellcom 5PT (RTM) includes the active constituent 5-phenyltetrazole.

The three sample primer composition were prepared by weighing out 98 grams of the commercially available primer composition. Under constant agitation under 200 to 300 rpm at 25°C, 2.0 grams of Cellcom 5PT (RTM) was added until the Cellcom 5PT (RTM) was solubilised. The constituents of the primer compositions once prepared are outlined in Table 1 appearing below:

**Table 1.**

| **Chemical Name** | **Unit** | **Chemlok 205 Cellcom 5PT (RTM)** | **PR200 Cellcom 5PT (RTM)** | **RC2002 Cellcom 5PT (RTM)** |
|---|---|---|---|---|
| Carbon Black | % | 1 | - | - |
| Etylbenzene | % | 4 | 5 | - |
| Methyl Ethyl Ketone | % | 5 | 74 | - |
| Methyl Isobuthyl Ketone | % | 60 | - | - |
| Xylene | % | 15 | - | - |
| 5-Phenyltetrazole | % | 3 | 3 | 3 |
| Titanium Dioxide | % | 5 | - | - |
| Ethyl alcohol | % | 1 | - | - |
| Toluene | % | 1 | - | - |
| Phenolic resin | % | 5 | 5 | 14 |
| Blend of mixed Xylenes and Etylbenzene | % | - | 10 | - |
| Phenol | % | - | 3 | - |
| Trichloroethylene | % | - | - | 48 |
| Not declared | % | - | - | 35 |

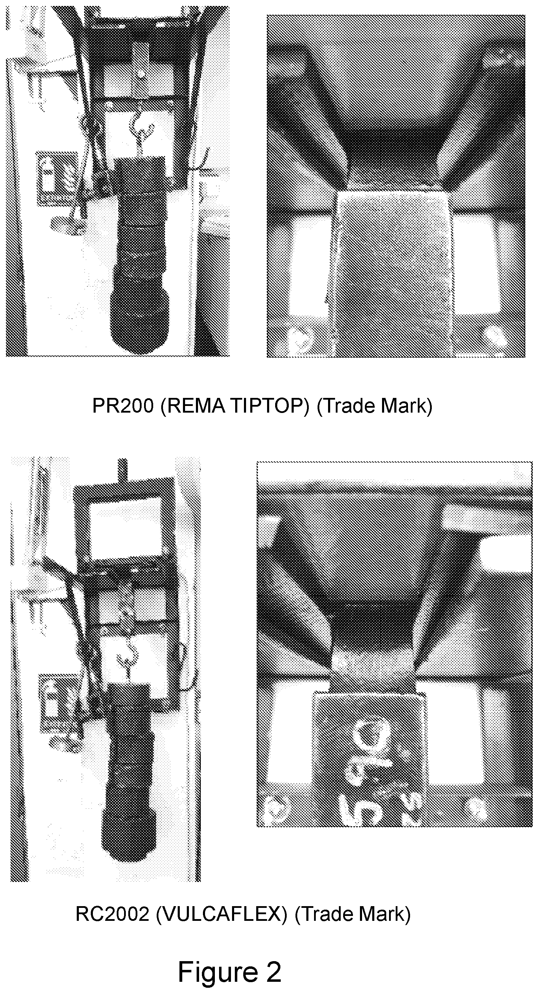

The sample primer compositions containing PR200 and RC2002 are not according to the invention. The three sample primer compositions were then applied to a blasted and degreased metal plate and were allowed to dry and cure for 2 hours at room temperature. A synthetic elastomer backing having a shore hardness of 65 Shore A was then adhered to the metal plate with the primer layer using a hot bonding adhesive and left to rest for 24 hours. An adhesion test was then performed according to standard ASTM D429-E and the results shown in Figure 2 and in Table 2:

**Table 2.**

| Sample | Cellcom 5 PT (RTM) (wt%) | Unit | Results | STD |
|---|---|---|---|---|
| PR200 MOD (RTM) | 2.0 | kg/in | 26.01 | ASTM D429-E |
| RC2002 MOD (RTM) | 2.0 | kg/in | 26.01 | ASTM D429-E |
| CHEMLOK 205 (RTM) | 2.0 | kg/in | 26.01 | ASTM D429-E |

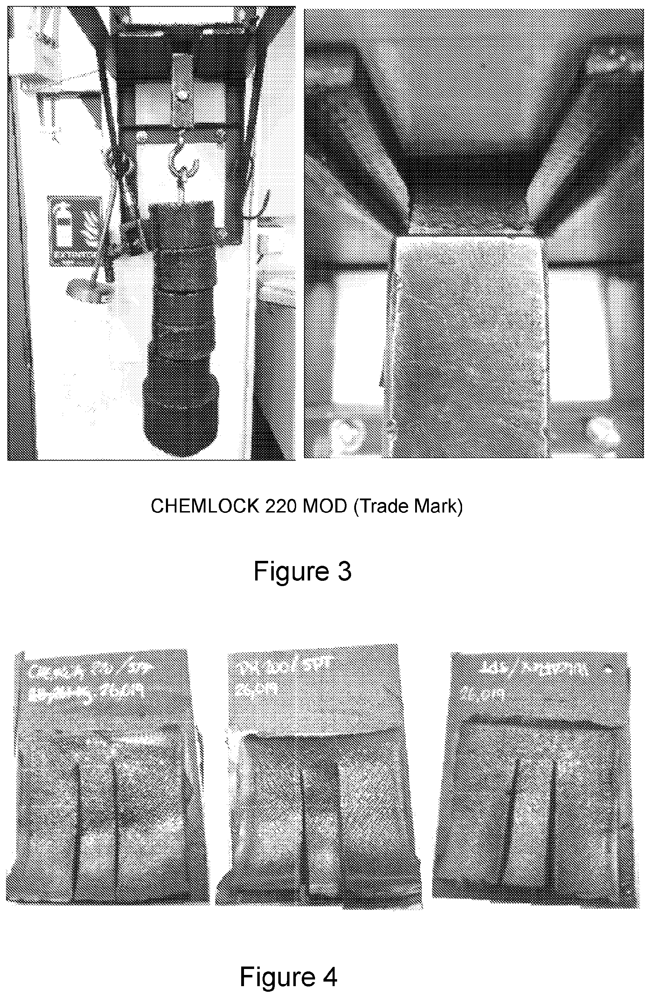

The test plates including the synthetic elastomer backing which were used in each of the adhesion tests outlined in Table 2 were then subjected to a heat treatment where they were placed into an oven at 250°C for 30 minutes. Once completed, the test plates were left to stand for 24 hours after which a further adhesion test was performed according to standard ASTM D429-E. The results were shown in Table 3 below and all samples easily peeled off from their corresponding metal plates by hand (see Figure 4). It was also not possible to carry out the adhesion test according to the standard.

**Table 3**

| Sample | Cellcom 5 PT (RTM) (wt%) | Unit | Results | STD |
|---|---|---|---|---|
| PR200 MOD (RTM) | 2.0 | kg/in | 0 | ASTM D429-E |
| RC2002 MOD (RTM) | 2.0 | kg/in | 0 | ASTM D429-E |
| CHEMLOK 205 (RTM) | 2.0 | kg/in | 0 | ASTM D429-E |

### Example 4 (not according to the invention).

An adhesive composition was prepared which included the addition of a blowing agent in the compositions. The sample adhesive composition was then tested for its adhesion properties before and after a thermal treatment in an oven at 250°C for 30 minutes.

A commercially available adhesive compositions under the trade name Chemlok 220 (RTM) was used as the base adhesive composition. A blowing agent commercially available under the trade name Cellcom 5PT (RTM) was added to the adhesive composition. Cellcom 5PT (RTM) includes the active constituent 5-phenyltetrazole.

The adhesive composition was prepared by weighing out 98 grams of the commercially available composition. Under constant agitation under 200 to 300 rpm at 25°C, 2.0 grams of Cellcom 5PT (RTM) was added until the Cellcom 5PT (RTM) was solubilised.

The adhesive compositions was then applied to a primer composition that had been applied to a blasted and degreased metal plate. A synthetic elastomer backing having a shore hardness of 65 Shore A was then adhered to the adhesive composition and left to rest for 24 hours. An adhesion test was then performed according to standard ASTM D429-E and the results shown in Figure 3 and in Table 4:

**Table 4.**

| Sample | Cellcom 5 PT (RTM)(wt%) | Unit | Results | STD |
|---|---|---|---|---|
| CHEMLOK 220 (RTM) | 2.0 | kg/in | 26.01 | ASTM D429-E |

The test plate including the synthetic elastomer backing which was used in the adhesion tests outlined in Table 4 was then subjected to a heat treatment where it was placed into an oven at 250°C for 30 minutes. Once completed, the test plate was left to stand for 24 hours after which a further adhesion test was performed according to standard ASTM D429-E. The result is shown in Table 5 below and the sample easily peeled off from the corresponding metal plates by hand. It was also not possible to carry out the adhesion test according to the standard.

**Table 5**

| Sample | Cellcom 5 PT (RTM) (wt%) | Unit | Results | STD |
|---|---|---|---|---|
| CHEMLOK 220 (RTM) | 2.0 | kg/in | 0 | ASTM D429-E |

In the foregoing description of preferred embodiments, specific terminology has been resorted to for the sake of clarity. However, the invention is not intended to be limited to the specific terms so selected, and it is to be understood that each specific term includes all technical equivalents which operate in a similar manner to accomplish a similar technical purpose. Terms such as "front" and "rear", "inner" and "outer, "above", "below", "upper" and "lower" and the like are used as words of convenience to provide reference points and are not to be construed as limiting terms.

In the context of this specification, the term "about," is understood to refer to a range of numbers that a person of skill in the art would consider equivalent to the recited value in the context of achieving the same function or result.

The reference in this specification to any prior publication (or information derived from it), or to any matter which is known, is not, and should not be taken as, an acknowledgement or admission or any form of suggestion that prior publication (or information derived from it) or known matter forms part of the common general knowledge in the field of endeavour to which this specification relates.

In this specification, the word "comprising" is to be understood in its "open" sense; that is, in the sense of "including", and thus not limited to its "closed" sense; that is, the sense of "consisting only of". A corresponding meaning is to be attributed to the corresponding words "comprise, "comprised" and "comprises" where they appear.

Furthermore, invention(s) have described in connection with what are presently considered to be the most practical and preferred embodiments. Also, the various embodiments described above may be implemented in conjunction with other embodiments, e.g., aspects of one embodiment may be combined with aspects of another embodiment to realize yet other embodiments. Further, each independent feature or component of any given assembly may constitute an additional embodiment.

## Claims

1. A primer composition for adhering an elastomer layer to a metal substrate wherein the primer composition includes:
a blowing agent,; and
titanium dioxide; **characterised in that** the blowing agent is 5-phenyltetrazole.

2. The primer composition according to claim 1 wherein the primer composition includes 5-phenyltetrazole in an amount of about 1 wt% to about 5 wt%.

3. The primer composition according to claim 1 wherein the primer composition includes 5-phenyltetrazole in an amount of about 1 wt% to about 2 wt%.

4. The primer composition according to claim 1 wherein the primer composition includes 5-phenyltetrazole in an amount of about 2 wt% to about 3 wt%.

5. The primer composition according to any one of the preceding claims wherein the primer composition includes phenolic resin.

6. The primer composition according to any one of the preceding claims wherein the primer composition further includes any one or a combination of the following further constituents:
carbon black,
ethylbenzene,
methyl ethyl ketone,
methyl isobutyl ketone,
xylene,
ethyl alcohol,
toluene,
tetrachloroethylene
phenol, and,
trichloroethylene.

7. Use of the primer composition according to any one of the preceding claims for bonding an elastomer layer to a metal substrate.

8. A method of adhering an elastomer layer to a metal substrate wherein the method includes the following steps: (a) adhering the elastomer layer to the metal substrate by applying the primer composition according to any one of claims 1 to 6 between the elastomer layer and the metal substrate; and, (b) allowing the primer composition to cure.

9. The method according to claim 8 wherein a further elastomer layer is bonded to the elastomer layer.

10. The method according to claim 9 wherein the further elastomer layer is an anti-abrasion rubber layer.

11. The method according to any one of claims 8 to 10 wherein a further hot bonding adhesive composition is applied to the primer composition at step (a).

## Patentansprüche

1. Primerzusammensetzung zum Anhaften einer Elastomerschicht an ein Metallsubstrat, wobei die Primerzusammensetzung Folgendes umfasst:
ein Treibmittel; und
Titandioxid, **dadurch gekennzeichnet, dass** das Treibmittel 5-Phenyltetrazol ist.

2. Primerzusammensetzung nach Anspruch 1, wobei die Primerzusammensetzung 5-Phenyltetrazol in einer Menge von etwa 1 Gew.-% bis etwa 5 Gew.-% umfasst.

3. Primerzusammensetzung nach Anspruch 1, wobei die Primerzusammensetzung 5-Phenyltetrazol in einer Menge von etwa 1 Gew.-% bis etwa 2 Gew.-% umfasst.

4. Primerzusammensetzung nach Anspruch 1, wobei die Primerzusammensetzung 5-Phenyltetrazol in einer Menge von etwa 2 Gew.-% bis etwa 3 Gew.-% umfasst.

5. Primerzusammensetzung nach einem der vorhergehenden Ansprüche, wobei die Primerzusammensetzung Phenolharz umfasst.

6. Primerzusammensetzung nach einem der vorangehenden Ansprüche, wobei die Primerzusammensetzung ferner ein beliebiges oder eine Kombination der folgenden weiteren Bestandteile umfasst:
Ruß,
Ethylbenzol,
Methylethylketon,
Methylisobutylketon,
Xylol,
Ethylalkohol,
Toluol,
Tetrachlorethylen,
Phenol und
Trichlorethylen.

7. Verwendung der Primerzusammensetzung nach einem der vorhergehenden Ansprüche zum Verbinden einer Elastomerschicht mit einem Metallsubstrat.

8. Verfahren zum Anhaften einer Elastomerschicht an ein Metallsubstrat, wobei das Verfahren die folgenden Schritte umfasst: (a) Anhaften der Elastomerschicht an das Metallsubstrat durch Aufbringen der Primerzusammensetzung nach einem der Ansprüche 1 bis 6 zwischen der Elastomerschicht und dem Metallsubstrat; und
(b) Härtenlassen der Primerzusammensetzung.

9. Verfahren nach Anspruch 8, wobei eine weitere Elastomerschicht mit der Elastomerschicht verbunden wird.

10. Verfahren nach Anspruch 9, wobei die weitere Elastomerschicht eine abriebfeste Gummischicht ist.

11. Verfahren nach einem der Ansprüche 8 bis 10, wobei in Schritt (a) eine weitere Heißverbindungsklebstoffzusammensetzung auf die Primerzusammensetzung aufgebracht wird.

## Revendications

1. Composition primaire pour faire adhérer une couche élastomère à un substrat métallique, dans laquelle la composition primaire comprend :
un agent gonflant, ; et
du dioxyde de titane, **caractérisée en ce que** l'agent gonflant est le 5-phényltétrazole.

2. Composition primaire selon la revendication 1, dans laquelle la composition primaire comporte du 5-phényltétrazole en une quantité d'environ 1 % en poids à environ 5 % en poids.

3. Composition primaire selon la revendication 1, dans laquelle la composition primaire comporte du 5-phényltétrazole en une quantité d'environ 1 % en poids à environ 2 % en poids.

4. Composition primaire selon la revendication 1, dans laquelle la composition primaire comporte du 5-phényltétrazole en une quantité d'environ 2 % en poids à environ 3 % en poids.

5. Composition primaire selon l'une quelconque des revendications précédentes, dans laquelle la composition primaire comporte une résine phénolique.

6. Composition primaire selon l'une quelconque des revendications précédentes, dans laquelle la composition primaire comporte en outre l'un quelconque ou une combinaison des constituants supplémentaires suivants :
noir de carbone,
éthylbenzène,
méthyléthylcétone,
méthylisobutylcétone,
xylène,
alcool éthylique,
toluène,
tétrachloroéthylène
phénol, et,
trichloréthylène.

7. Utilisation de la composition primaire selon l'une quelconque des revendications précédentes pour lier une couche élastomère à un substrat métallique.

8. Procédé pour faire adhérer une couche élastomère à un substrat métallique, dans lequel le procédé comporte les étapes suivantes : (a) faire adhérer la couche élastomère au substrat métallique en appliquant la composition primaire selon l'une quelconque des revendications 1 à 6 entre la couche élastomère et le substrat métallique ; et (b) laisser durcir la composition primaire.

9. Procédé selon la revendication 8, dans lequel une couche élastomère supplémentaire est liée à la couche élastomère.

10. Procédé selon la revendication 9, dans lequel la couche élastomère supplémentaire est une couche de caoutchouc anti-abrasion.

11. Procédé selon l'une quelconque des revendications 8 à 10, dans lequel une composition adhésive de liaison à chaud supplémentaire est appliquée sur la composition primaire à l'étape (a).
